Europäisches Patentamt

(19) European Patent Office

Office européen des brevets

(11) Numéro de publication: **0 114 555**
**B1**

(12) **FASCICULE DE BREVET EUROPEEN**

(45) Date de publication du fascicule du brevet: **01.06.88**

(21) Numéro de dépôt: **83402468.9**

(22) Date de dépôt: **19.12.83**

(51) Int. Cl.⁴: **A 23 G 3/00**, A 23 G 3/02, A 61 J 3/06

(54) Pastilles du type lozenge à base de sorbitol ou de fructose cristallisé et leur procédé de fabrication.

(30) Priorité: **17.12.82 FR 8221270**

(43) Date de publication de la demande:
**01.08.84 Bulletin 84/31**

(45) Mention de la délivrance du brevet:
**01.06.88 Bulletin 88/22**

(84) Etats contractants désignés:
**DE GB IT NL SE**

(56) Documents cités:
**GB-A- 924 052**
**US-A-1 601 302**
**US-A-3 677 770**
**US-A-4 127 645**
**US-A-4 241 092**
**US-A-4 289 794**
**US-A-4 324 107**

**CONFECTIONERY PRODUCTION, vol. 40, no. 11, novembre 1974, pages 516-519. A. SLAWATYCKI: "Suggested ways of making crisp aerated confections"**

(73) Titulaire: **Roquette Frères**
**F-62136 Lestrem (FR)**

(72) Inventeur: **Serpelloni, Michel**
**270, Boulevard Voltaire**
**F-62400 Bethune (FR)**

(74) Mandataire: **Koch, Gustave et al**
**Cabinet PLASSERAUD 84, rue d'Amsterdam**
**F-75009 Paris (FR)**

Courier Press, Leamington Spa, England.

# 0 114 555

**Description**

L'invention a pour objet des pastilles du type lozenge à base de sorbitol ou de fructose cristallisé. Elle vise également le procédé de fabrication de ces produits.

Per "pastilles du type lozenge"—lozenge étant un terme d'origine anglo-saxonne qui s'est imposé dans les industries de la confiserie et des produits pharmaceutiques—, on désigne des produits qui sont traditionnellement obtenus à partir d'une pâte à base de saccharose finement broyé. Cette pâte, qui comporte un liant assurant l'adhésion entre les cristaux de saccharose, est aromatisée et, le cas échéant, additionnée de principes pharmaceutiques actifs, puis est amenée par laminage puis découpage à sa forme définitive de pastille du type lozenge que l'on sèche en vue d'éliminer l'eau qui a été nécessairement ajoutée au moment de la préparation de la pâte de départ.

Le liant peut être constitué par un mélange de gommes et/ou de gélatine et, éventuellement, d'amidon.

Les pastilles du type lozenge doivent avoir une surface lisse et une texture homogène.

Le mélange intime entre le liquide, notamment l'eau, de liaison et les constituents pulvérulents, à savoir le sucre et le liant, et tous autres ingrédients éventuels, peut être réalisé dans un dispositif de type pétrin ou du type extrudeur.

La pâte résultant de cette opération de mélange est amenée par laminage sous la forme d'une couche d'épaisseur choisie à l'avance et une fois que la surface de la pâte est suffisamment dure et sèche pour éviter tout collage sur les outils de découpage —durcissement qui est généralement obtenu par soufflage d'air chaud et/ou frois suivi éventuellement de saupoudrage à l'aide, par exemple, d'amidon, de fécule ou de mannitol— on découpe les pastilles du type lozenge à la forme voulue avant de procéder à leur séchage.

Le séchage est en général effectué dans des étuves à atmosphère de température et d'humidité réglables, en général par séquences, afin de favoriser une texture uniforme du produit fini, les températures de séchage étant en général inférieures à 50°C et la durée du séchage inférieure à 72 heures.

Pour fixer les idées, on indique ci-après, à titre d'exemple, la composition d'une pâte pour la fabrication de lozenges à base de saccharose

| | | |
|---|---|---|
| —sucre glace: | 89,64 parties en poids | |
| —gélatine: | 0,50 " | " |
| —gomme arabique: | 1,58 " | " |
| —gomme adragante (à 11,1% de matières sèches): | 0,05 " | " |
| —eau: | 7,23 " | " |
| —fécule de pomme de terre (saupoudrage): | 1,00 " | " |
| —arôme et colorant: | q.s.p. | |

On signale que le saccharose se trouve souvent en mélange avec du dextrose ou du sirop de glucose et que l'on trouve perfois de faibles quantités de sorbitol ou de glycérol à titre d'humectants retardant le séchage pour conduire à un produit régulièrement séché.

Il existe des pastilles du type lozenge "sans sucre" dans lesquelles le saccharose, le dextrose, les sirops de glucose, les amidons et autres sont remplacés par notamment des polyols tels que le xylitol, le mannitol et les hydrolysats d'amidon hydrogénés.

On a également déjà proposé de remplacer dans ces lozenges "sans sucre" le saccharose par du sorbitol (cf. Confectionery Production, mai 1971: pages 289 à 291 et janvier 1973: pages 14, 16 et 45).

Mais les pastilles du type lozenge à base de sorbitol, de même, par ailleurs, que celles à base de fructose ne se sont pas imposées et ont été bien au contraire écartées par les industriels, leur texture finale n'étant pas satisfaisante en raison du fait qu'il est impossible de réalizer un séchage uniforme "dans la masse" de ces produits.

Non seulement les pâtes à base de sorbitol ou de fructose, après découpage et étuvage, sont ridées et irrégulières en surface, mais de plus la partie interne de la pâte est toujours humide.

Il se trouve que le sorbitol et le fructose permettraient respectivement de produire très économiquement, s'ils étaient utilisables, des pastilles du type lozenge "sans sucre" et des pastilles du type lozenge diététiques.

Or, la Société Domanderesse a le mérite d'avoir trouvé qu'après séchage les pestilles du type lozenge à base de sorbitol ou de fructose constituaient des produits tout à fait satisfaisants, secs dans le masse et à surface régulière, dès lors que leur masse constitutive comporte une pluralité de cavités, de préférence de microcavités, dont certaines au moins communiquent avec la surface.

Par conséquent, les pastilles de type lozenge à base de sorbitol ou de fructose selon l'invention sont caractérisées par le fait qu'elles comportent, dans leur masse constitutive, une pluralité de cavités, de préférence une pluralité de microcavités, dont certaines au moins communiquent avec la surface.

Du fait de la présence de ces cavités, les lozenges selon l'invention présentent une densité apparente, mesurée, notamment dans l'huile de maïs, sur le produit fini après séchage, plus faible que celle des lozenges fabriqués selon une formule conventionnelle.

En conséquence, les pastilles du type lozenge conformes à l'invention qui comportent une pluralité de cavités, de préférence de microcavités dont certaines au moins communiquant avec la surface, sont de plus

2

caractérisées par le fait que leur densité est inférieure d'au moins 5% et, de préférence, d'au moins 8% et d'au plus 50%, à celle des lozenges fabriqués selon des formules conventionnelles.

Le procédé conforme à l'invention pour la préparation des pastilles du type lozenge conformes à · l'invention est caractérisé par le fait que, pour conférer après laminage, à la masse constitutive des pastilles une pluralité de cavités, de préférence de microcavités, dont au moins certaines communiquent avec la surface, on a recours à une substance incorporée à la pâte constitutive des pastilles et susceptible de donner lieu, sous l'action de la chaleur appliquée au moment de l'étape de séchage et/ou éventuellement sous l'action d'un agent chimique, à un dégagement gazeux au sein de la pâte, en une pluralité d'endroits à l'emplacement desquels se formant alors autant de cavités, de préférence de microcavités, dont au moins certaines communiquent avec la surface, ladite substance étant constituée par un carbonate, notamment par le bicarbonate de sodium, l'agent chimique propre à provoquer la décomposition du carbonate avec dégagement de $CO_2$ étant un acide notamment organique compatible avec l'application en confiserie ou dans l'industrie pharmaceutique, notamment l'acide gluconique, de préférence apporté sous la forme de gluconodeltalactone.

L'invention, qui vise encore d'autres modes de réalisation avantageux dont il sera plus explicitement question ci-après pourra être bien comprise à l'aide du complément de description et des dessins qui suivent.

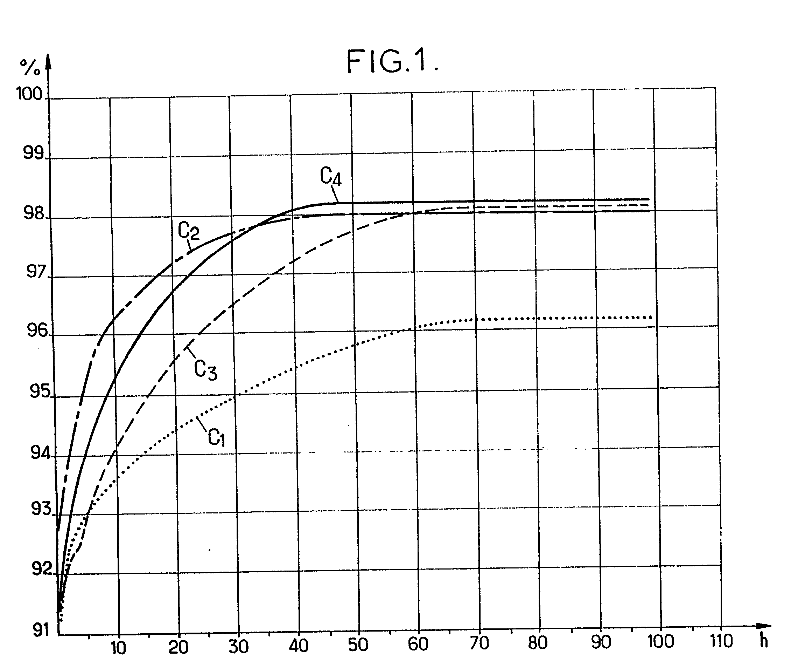

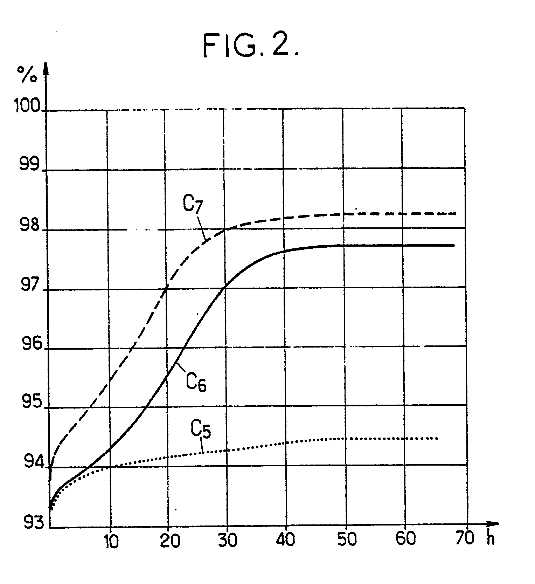

Dans ces dessins, les figures 1 et 2 sont des représentations graphiques illustrant le cinétique de séchage des lozenges respectivement à base de sorbitol et à base de fructose.

Se proposant par conséquent de fabriquer des pastilles du type lozenge à base de sorbitol ou de fructose, on s'y prend comme suit ou de façon analogue.

On prépare tout d'abord la pâte par mélange, notamment à l'intérieur d'un appareil du type pétrin, des divers ingrédients, à savoir le sorbitol ou fructose cristallisés, le liant, les agents aromatisants et éventuellement les principes actifs pharmaceutiques et on a recours au moyen propre à conférer à la pâte ainsi obtenue au momemt du laminage et du séchage une structure comportant des cavités notamment des microcavités réparties uniformément dans la masse et dont certaines communiquent avec la surface.

Le susdit moyen peut être un moyen physique ou encore, préférentiellement, un premier agent chimique (notamment un carbonate et plus particulièrement le bicarbonate de Na) dont les particules sont uniformément réparties au sein de la pâte et qui se décompose à partir de l'étape de laminage ou de séchage sous l'influence de la chaleur et/ou d'un deuxième agent chimique (notamment d'un acide plus particulièrement organique compatible avec l'usage futur de la pastille de type lozenge), avec dégagement de gaz au sein de la pâte aux endroits où sont localisées les particules constitutives du premier agent chimique.

C'est ce dégagement gazeux qui est à l'origine de la formation des cavités ou microcavités réparties au sein de la pâte.

Alors que le premier agent chimique est avantageusement constitué par du bicarbonate de Na, le deuxième est avantageusement l'acide gluconique de préférence apporté sous la forme de gluconodeltalactone qui, en présence de l'eau entrant dans la constitution du mélange, s'hydrolyse progressivement en acide gluconique sous l'influence duquel le bicarbonate de soude se décompose avec dégagement de gaz carbonique.

Pour que la structure de la pastille finale soit la plus homogène possible, c'est-à-dire pour que la répartition des cavités distribuées au sein de sa masse soit la plus régulière possible, il importe que les répartitions des particules constitutives du premier agent chimique et de l'acide soient les plus régulières possibles, ce qui explique la nécessité d'un mélange intime des divers constituants.

Il est avantageux d'incorporer dans la composition, au niveau du mélangeur, tout d'abord l'acide puis partiellement ou totalement le premier agent chimique: mais on peut aussi ajouter le premier agent chimique avant l'acide, ou en même temps, en une seule fois ou de façon fractionnée.

Le carbonate et l'acide sont présents, de préférence, en des proportions respectives qui satisfont à la stoechiométrie de la décomposition du carbonate avec dégagement de $CO_2$.

Les modalités d'addition des constituants du moyen propre à conférer à la pastille la structure à cavités sont déterminées en vue d'éviter le plus possible les pertes de gaz avant le laminage de la pâte.

Grâce à la progressivité de son hydrolyse, la gluconodeltalactone est particulièrement avantageuse, les cavités se formant progressivement et lentement dans la pâte principalement au début de l'étuvage.

De préférence, la quantité de bicarbonate de sodium mise en oeuvre est de 0,1 à environ 5% et, pluspréférentiellement encore, de 0,2 à 1% en poids par rapport à la masse totale de la pâte; la quantité de gluconodeltalactone peut être de 0,047% à environ 5%, de préférence de 0,047% à 2,35% et, plus particulièrement encore, de 0,2 à 1,5% en poids par rapport à la masse totale de la pâte.

Le laminage et le séchage en étuve des pastilles obtenues par découpage sont réalisés à l'aide des techniques conventionnelles et éprouvées dans ce domaine industriel.

Des détails peuvent être trouvés à ce sujet dans les exemples.

La structure ainsi conférée aux pastilles de type lozenge finales est une structure comportant une pluralité de cavités, notamment et de préférence des microcavités dont les caractéristiques ont été indiquées plus haut et grâce auxquelles un séchage parfait dans la masse ainsi que l'obtention d'une surface régulière sont rendues possibles.

**0 114 555**

Dans le cas des pastilles de type lozenge au sorbitol, une texture de surface homogène lisse et régulière peut être obtenue assez facilement par utilisation

—d'une part, de sorbitol de granulométrie très fine inférieure à 300 microns, de préférence comprise entre 30 et 200 microns et,

—d'autre part, de préférence d'un système liant comportant au moins en partie de la gomme adragante.

L'incorporation d'un agent plastifiant tel que le glycérol ou, plus préférentiellement encore, d'un hydrolysat d'amidon hydrogéné, permet l'obtention d'une surface encore plus homogène, ne présentant pas de craquelures occasionnées par l'opération de laminage.

Dans le cas des pastilles de type lozenge au fructose, il est difficile d'obtenir un produit fini de forme régulière et de surface homogène, en raison essentiellement de la tendance à "l'effondrement" de la structure du lozenge humide à base de fructose au cours de l'étuvage. Afin de remédier à ce défaut, il est souhaitable, la plus souvent, d'incorporer dans le pâte destinée à la fabrication du lozenge au fructose, un agent rétenteur de forme qui peut être choisi notamment parmi les agents amylacés, granulaires ou prégélatinisés, les maltodextrines ou les dérivés cellulosiques. Ces agents de structure sont utilisés dans une proportion comprise entre 2 et 15% en poids par rapport à la pâte humide, de préférence dans une proportion comprise entre 3 et 10% en poids. Un agent de structure préféré est constitué par une fécule de pomme de terre prégélatinisée telle que celle qui est commercialisée sous la marque "PRESOL 121" par la Société Demanderesse.

Exemple 1

Préparation de pastilles de type lozenge selon l'art antérieur respectivement à base de sorbitol et à base de saccharose.

a) Pastilles de type lozenge à base de sorbitol.

On prépare tout d'abord un liant.

Pour ce faire, on hydrate pendant 12 heures à 50°C:

—1,54 partie en poids de gomme arabique dispersée dans 1,03 partie en poids d'eau (60% en poids),

—0,45 partie en poids de gomme adragante dispersée dans 3,64 parties en poids d'eau,

puis on les mélange avec une dispersion de 0,72 partie en poids de gélatine du type "100 Bloom" dans 0,72 partie en poids d'eau également portée à 50°C.

A ce mélange de trois constituants dans l'eau, on ajoute, toujours à 50°C,

—2,24 parties en poids d'eau

—4,16 parties en poids d'hydrolysat d'amidon hydrogéné à 75% de matières sèches, par exemple celui commercialisé sous la marque LYCASIN 80/55

—1,33 partie en poids de glycérine pure,

puis on introduit l'ensemble dans un pétrin à double enveloppe (par exemple celui de type DVA de la marque KUSTNER) contenant 81,46 parties en poids de sorbitol cristallisé éventuellement du type de celui qui est commercialisé sous la marque de fabrique NEOSORB[R] P100T.

L'opération de mélange de la ausdite solution avec la poudre de sorbitol cristallisé dure environ 10 minutes, pendant lesquelles le pétrin est refroidi par de l'eau courante à température ambiante qui circule dans la double enveloppe, afin que la température de la pâte humide n'excède pas 35—40°C.

La pâte humide est ensuite laminée et, pendant le laminage, on ajoute en poudrage de surface, 1,66 partie en poids de mannitol.

Le laminage peut être effectué sur un appareil de type SYN.603 de la marque RONDO.

L'hydrolysat et le glycérine permettent d'éviter les craquelures de la surface pendant le laminage.

La pâte laminée est refroidie à l'aide d'un courant d'air froid en surface, la température passant de 29°C à 25°C environ, puis elle est découpée (estampée) à l'aide d'un outil de découpe.

Le refroidissement permet de sécher et de durcir légèrement la surface de la pâte laminée, ce qui favorise l'efficacité du découpage.

Après découpage de la pâte, les morceaux obtenus, c'est-à-dire les futures pastilles de type lozenge, sont étuvés à 45°C et à 5—10% d'humidité relative (HR) par exemple dans un appareil de type A 368 de la marque CAPIC.

La perte de poids est mesurée à intervalles réguliers et la teneur en matières sèches du produit est déterminée.

L'évolution de la teneur en matières sèches m.s. (en % en poids) en fonction du temps t (en heures) est représentée sur le graphique de la figure 1 par la courbe $C_1$.

Il apparaît, à l'examen de cette courbe, que la teneur en matières sèches passe de la valeur de 91,24 à l'instant D du séchage à 96,23 au bout d'environ 70 heures; ensuite l'évolution asymptotique de la courbe montre qu'on ne peut pas dépasser cette teneur en matières sèches et que le séchage est arrêté.

Les pastilles de type lozenge obtenues après 70 heures de séchage sont sèches et ridées en surface, molles et humides en profondeur. De plus, la pâte est déformée. Elles ne constituent pas un article de confiserie commercialisable, comparable à ceux obtenus avec le saccharose.

Le densité apparente des lozenges obtenus a été mesurée, à 20°C, dans l'huile de maïs, à l'aide d'un

4

picnomètre à liquide, de HUBBARD à large col et d'un volume de 50 cm³. Elle est égale dans ce cas à 1,4268 g/cm³.

b) Pastilles de type lozenge au saccharose.

Pour préparer le liant, on hydrate pendant 12 heures à 50°C;

—1,58 partie en poids de gomme arabique dispersée dans 1,05 partie en poids d'eau (60% en poids),
—0,0055 partie en poids de gomme adragante dispersée dans 0,0445 partie en poids d'eau (11% en poids),

puis on les mélange avec une dispersion, également à 50°C, de 0,5 partie en poids de gélatine de type 100 Bloom dans 0,5 partie en poids d'eau, l'ensemble étant complété par 5,65 parties en poids d'eau et maintenu à 50°C jusqu'à son introduction dans un pétrin du type susdit contenant 89,64 parties en poids de saccharose finement broyé.

L'ensemble est mélangé intimement pendant 10 minutes puis la pâte est laminée de la manière susindiquée avec saupoudrage en surface de 1 partie en poids de fécule de pomme de terre.

La pâte laminée est ensuite découpée et étuvée à 45°C et à un taux d'humidité relative égal à 5—10% à l'intérieur de l'étuve décrite précédemment.

La perte de poids est mesurée à intervalles réguliers et la teneur en matières sèches du produit est déterminée.

L'évolution de la teneur en matières sèches m.s. (en % en poids) en fonction du temps t (en heures) est représentée sur le graphique de la figure 1 par la courbe $C_2$.

Il apparaît à l'examen de cette courbe que la teneur en matières sèches passe de la valeur de 92,75% à l'instant 0, c'est-à-dire au début du séchage, à la valeur de 98% après un temps de séchage d'environ 45 heures.

L'évolution ultérieure asymptotique de la courbe à cette valeur de 98% indique que le séchage ne progresse plus.

Les pastilles de type lozenge ainsi obtenues sont de forme régulière, séchées dans la masse de façon uniforme et agréables à la consommation.

Leur densité apparente, mesurée de la même façon que précédemment, est trouvée égale à: 1,0930 g/cm³.

c) Comparaison des résultats selon a) et b).

Dans le cas des pastilles de type lozenge obtenues selon a), la masse constitutive de ces pastilles contient en fin de séchage:

100—96,23=3,77 parties en poids d'eau alors qu'au début du séchage elle contenait:

100—91,24=8,76 parties en poids d'eau.

Après séchage, il reste donc:

$$\frac{3,77}{8,76}\times100=43,04\ \%$$

de l'eau présente au départ.

Dans le cas des pastilles selon b), on a
—en fin de séchage: 100−98=2 parties en poids d'eau
—au début du séchage: 100−92,75=7,25 parties en poids d'eau,

ce qui fait qu'après séchage il reste:

$$\frac{2}{7,25}\times100=27,59\%$$

de l'eau de départ.

Il s'ensuit que, dans le cas des pastilles selon b), non seulement le séchage est uniforme, mais il est aussi plus poussé puisqu'on élimine une quantité supplémentaire de:

$$43,04-27,59=15,45\%\ d'eau$$

Exemple 2

Pastilles de type lozenge au sorbitol, conformes à l'invention.

On prépare une solution liante à base de gomme arabique, de gomme adragante et de gélatine de façon identique à ce qui est indiqué à l'exemple 1a).

Au mélange ainsi réalisé, on ajoute, en maintenant troujours la température à 50°C:

—0,52 partie en poids de gluconodeltalactone
—2,24 parties en poids d'eau

—4,16 parties en poids d'hydroylsat d'amidon hydrogéne à 75% de matières sèches, par exemple celui commercialisé sous la marque LYCASIN® 80/55.

—1,33 partie en poids de glycérine pure.

La solution résultante est introduite dans le pétrin préalablement utilisé et qui contient:

—81,47 parties en poids de sorbitol cristallisé par exemple de marque NEOSORB® P100T

—0,52 partie en poids de bicarbonate de Na,

l'ensemble ayant préalablement été intimement mélangé par un pétrissage de 3 minutes.

Le mélange de la solution liante et du sorbitol est ensuite pétri pendant 10 minutes, le pétrin étant refroidi à l'eau courante grâce à une circulation d'eau dans la double enveloppe afin que la température de la pâte humide ne dépasse pas 35—40°C.

La pâte humide est ensuite laminée dans l'appareil identifié ci-dessus.

On ajoute, pendant le laminage, 1,66 partie en poids de mannitol en saupoudrage de surface.

On constate que la surface de la pâte ne se craquelle pas pendant le laminage.

La pâte laminée est refroidie superficiellement à l'aide d'un courant d'air froid qui permet d'abaisser la température de la pâte de 29 à 25°C environ.

La pâte est ensuite découpée à l'aide d'on outil de découpe approprié.

Les futures pastilles encore humides sont placées dans une étuve pendant 4 heures à 30°C et sous une humidité relative de 20%, puis on finit le séchage à 45°C pendant 61 heures et sous une humidité relative de 5—10%.

Les pastilles de type lozenge ainsi étuvées sont parfaitement séchées et présentent une pluralité de microcavités. Leur densité apparente est trouvée égale à 1,2802 $g/cm^3$.

Par comparaison avec les lozenges au sorbitol fabriqués à l'exemple la, on s'aperçoit que la densité apparente des lozenges conformes à l'invention est inférieure de 10,28%.

La texture du produit ainsi obtenu est unanimement appréciée par un ensemble de 6 dégustateurs.

Pendant le séchage, on a déterminé la perte de poids à intervalles réguliers.

De la même manière que les courbes $C_1$ et $C_2$, la courbe $C_3$ de la figure 1 traduit l'évolution de la teneur en matières sèches en fonction du temps.

De l'examen de cette courbe, il résulte que la teneur en matières sèches passe de 91,33% au démarrage du séchage à une valeur de 98,08 après 65 heures; la courbe est ensuite asymmtotique.

Lorsque le séchage ne progresse plus, il rest donc:

$$100-98,08=1,92\% \text{ d'eau}$$

contre:

$$100-91,33=8,67\% \text{ d'eau}$$

au départ, ce qui signifie qu'après séchage il reste:

$$\frac{1,92}{8,67}\times100=22,15\%$$

de l'eau présente au départ.

En comparaison avec le résultat selon l'exemple 1b), on constate que le séchage est plus efficace, une quantité supplémentaire de

$$27,59-22,15=5,44\%$$

d'eau étant éliminée.

A titre de variante, on soumet la pâte précédente à un séchage différent consistant à la soumettre à une température de 45°C pendant 45 heures, le taux d'humidité de l'air étant dès le départ d'environ 5—10%.

Pendant le séchage, on a déterminé le perte de poids à intervalles réguliers.

De la même manière que les courbes $C_1$ à $C_3$, la courbe $C_4$ traduit l'évolution de la teneur en matières sèches en fonction du temps.

De l'examen de la courbe $C_4$, il résulte que le séchage ne progresse plus après la 45ème heure à laquelle la teneur en matière sèches a atteint la valeur limite de 98,2.

Les microcavités formées sont plus grossières et la densité apparente est de 0,8895 $g/cm^3$ après séchage, soit une diminution de 37,66% par rapport à la densité des lozenges au sorbitol fabriqués à l'exemple la.

La texture est considérée par les dégustateurs comme étant plus grossière.

Il s'ensuit que la formation de microcavités de dimensions régulières plus petites, en d'autres termes l'obtention d'une texture fine, est favorisée par un séchage en deux étapes dont seule la seconde est effectuée sous une teneur en humidité voisine de 5 à 10%.

6

Exemple 3

Pastilles de type lozenge au fructose.

a) Cas d'une formule selon l'art antérieur, mais comportant un agent de structure.

Pour préparer le liant, on hydrate pendant 12 heures à 50°C:

—0,05 partie en poids de gomme adragante dispersée dans 0,45 partie en poids d'eau (10% en poids),

—4,02 parties en poids de gomme arabique dispersées dans 4,02 parties en poids d'eau (50% en poids),

puis on mélange les deux dispersions avec:

—3,09 parties en poids de maltodextrine de DE (dextrose-équivalent) de 20, la solution ainsi obtenue étant introduite dans un pétrin qui peut être celui identifié aux exemples précédents et qui contient un mélange intime de:

—79,08 parties en poids de fructose à 2% d'humidité,

—8,66 parties en poids de fécule de pomme de terre prégélatinisée à 7,2% d'humidité, par exemple celle de marque PRESOL® 121 commercialisée par la Société Demanderesse.

L'opération de mélange est conduite pendant 10 minutes environ, le pétrin étant maintenu à 40°C grâce à une circulation d'eau chaude dans la double enveloppe.

La pâte humide est ensuite laminée et on ajoute pendant le laminage 0,68 partie de fécule de pomme de terre en saupoudrage de surface.

La pâte est souple et ne se craquelle pas pendant le laminage.

La pâte laminée est ensuite refroidie superficiellement à l'aide d'un courant d'air froid qui permet d'abaisser la température de la pâte jusqu'à une valeur à laquelle elle présente une dureté suffisante pour le découpage.

Ce dernier se fait à l'aide d'un outil de découpe approprié.

Une fois la pâte découpée, on place les futures pastilles encore humides dans une étuve ventilée à 45°C, le taux d'humidité étant de 5 à 10%.

Le produit étuvé ne sèche que superficiellement et reste humide et mou en son centre au bout de 50 heures. Le lozenge obtenu présente une forme irrégulière.

La densité apparente, mesurée après 50 heures de séchage, est de 1,4557 g/cm$^3$.

La perte de poids pendant le séchage est mesurée à intervalles réguliers et la teneur en matières sèches du produit est déterminée.

L'évolution de la teneur en matière sèches m.s. (en % en poids) en fonction du temps t (en heures) est représentée sur le graphique de la figure 2 par la courbe $C_5$.

Il apparaît à l'examen de cette courbe que la teneur en matières sèches part de la valeur de 93,33 à l'instant 0 du séchage.

L'évolution asymptotique de cette courbe montre qu'on ne peut dépasser un taux de matières sèches de 94,43%, valeur qui est atteinte après environ 50 heures et à laquelle le séchage est arrêté.

En fin de séchage, la pastille de type lozenge contient 100−94,43=5,57% d'eau alors qu'initialement il y en avait 100−93,33=6,67%.

Il reste donc:

$$\frac{5,57}{6,67} \times 100 = 83,51\%$$

de l'eau initialement présente dans la pâte humide.

b) Cas d'une formule selon l'invention comportant du bicarbonate de Na, de la gluconodeltalactone et un agent de structure.

Pour préparer le liant, en hydrate pendant 12 heures à 50°C:

—0,05 partie en poids de gomme adragante dispersée dans 0,45 partie en poids d'eau (10% en poids),

—4,02 parties en poids de gomme arabique dispersée dans 4,02 parties en poids d'eau (50% en poids),

puis on mélange les deux dispersions avec:

—3,09 parties en poids de maltodextrine d'un dextrose-équivalent DE égal à 20,

—0,43 partie en poids de gluconodeltalactone,

la solution ainsi obtenue étant introduite dans un pétrin qui peut être celui identifié aux exemples précédents et qui contient un mélange intime de:

—78,2 parties en poids de fructose à 2% d'humidité,

—0,43 partie en poids de bicarbonate de Na et

—8,66 parties en poids de fécule de pomme de terre prégélatinisée à 7,2% d'humidité, par exemple cells de marque PRESOL® 121.

Les opérations de mélange, de laminage et de séchage sont conduites de la même manière que précédemment.

On constate cette fois-ci que le produit étuvé est parfaitement séché, comporte des microcavités régulièrement réparties, est agréable à sucer et possède un léger goût de caramel. Toutefois, la forme est légèrement bombée en surface.

7

**0 114 555**

La densité apparente est de 0,9628 g/cm$^3$. Elle est donc inférieure d'environ 33,9% à celle du lozenge fabriqué à l'exemple 3a) selon l'art antérieur.

La perte de poids pendant la séchage a là encore été mesurée à intervalles réguliers et la teneur en matières sèches du produit déterminée.

L'évolution de la teneur en matières sèches m.s. (en % en poids) en fonction du temps t (en heures) est représentée sur le graphique de la figure 2 par la courbe $C_6$.

De l'examen de cette courbe, il résulte que, d'une valeur de 93,34% au début du séchage, le teneur en matières sèches passe à 97,71% après une durée de séchage de 40 à 45 heures. La courbe devient ensuite asymptotique.

Il reste finalement:

$$100-97,71=2,29\%$$

d'eau résiduelle, en d'autres termes:

$$\frac{2,29}{100-93,34}\times100=34,38\%$$

de l'eau initialement contenue dans la pâte encore humide.

Cette eau est uniformément répartie et le séchage est homogène.

c) Cas d'une formule identique à celle de l'exemple 3b) mais ne comportant pas d'agent de structure.

On réalise la même pâte que sous b), mais sans toutefois prévoir le présence de fécule de pomme de terre prégélatinisée, remplacée dans la formule par une quantité supplémentaire de fructose (soit 86,4 parties de fructose à 2% d'humidité).

La perte de poids a de nouveau été mesurée.

L'évolution de la teneur en matières sèches en fonction du temps est représentée par le courbe $C_7$.

De l'examen de cette courbe, il apparaît que d'une valeur de 93,79% en début du séchage, le teneur en matières sèches passe à 98,26 après environ 45 heures, après quoi la teneur en matières sèches devient asymptotique.

Le produit séché (après 45 heures) présente une forme fortement aplatie, indiquant l'absence d'agent de structure, la surface étant bombée.

La densité en fin d'expérience est de 1,0192, soit inférieure de 30% à celle du produit obtenu selon 3a).

Le groupe de dégustateurs décrit ce produit comme assez cassent, agréable à sucer et ayant un léger goût de caramel.

Des susdites valeurs de la teneur en matières sèches, il résulte que $100-98,26=1,74\%$ d'eau restent dans le produit, ce qui représente:

$$\frac{1,74}{100-93,79}\times100=28,0\%$$

de l'eau de la pâte humide.

Cette eau est uniformément répartie dans le lozenge et le séchage est homogène.

**Revendications**

1. Pastilles du type lozenge à base de sorbitol ou de fructose cristallisé, caractérisées par le fait qu'elles sont sèches dans la masse, présentent une surface régulière et comportent dans leur masse constitutive une pluralité de cavités, de préférence de microcavités, dont certaines au moins communiquent avec la surface.

2. Pastilles du type lozenge selon la revendication 1, caractérisées par le fait que leur densité est inférieure d'au moins 5% et, de préférence d'au moins 8% et d'au plus 50%, à celle des lozenges fabriqués selon des formules conventionnelles.

3. Procédé pour préparer des pastilles du type lozenge selon l'une des revendications 1 et 2, caractérisé par le fait que, pour conférer après laminage, à la masse constitutive des pastilles, une pluralité de cavités, de préférence de microcavités, dont au moins certaines communiquent avec la surface, on a recours à une substance incorporée à la pâte constitutive des pastilles et susceptible de donner lieu, sous l'action de la chaleur appliquée au moment de l'étape de séchage et/ou éventuellement sous l'action d'un agent chimiques, à un dégagement gazeux au sein de la pâte, en une pluralité d'endroits à l'emplacement desquels se forment alors autant de cavités, de préférence de microcavités, dont au moins certaines communiquant avec la surface, ladite substance étant constituée par un carbonate, notamment par le bicarbonate de sodium l'agent chimique propre à provoquer la décomposition du carbonate étant un acide organique compatible avec l'application en confiserie ou dans l'industrie pharmaceutique, notamment l'acide gluconique, de préférence apporté sous la forme de gluconodeltalactone.

4. Procédé selon la revendication 3, caractérisé par le fait que l'on fait comporter un agent de structure à la masse constitutive des pastilles, dans la mesure où celles-ci sont à base de fructose cristallisé.

## Patentansprüche

1. Pastillenbonbons auf Basis von Sorbit oder kirstalliner Fruktose, dadurch gekennzeichnet, daß sie innerhalb der Masse trocken sind, eine gleichmäßige Oberfläche besitzen und in ihrer sie bildenden Masse eine Vielzahl Hohlräume, vorzugsweise Mikrohohlräume, aufweisen, von denen zumindest manche mit der Oberfläche in Verbindung stehen.

2. Pastillenbonbons gemäß Anspruch 1, dadurch gekennzeichnet, daß ihre Dichte zumindest 5%, vorzugsweise zumindest 8% und höchstens 50%, geringer ist als diejenige der nach herkömmlichen Rezepturen hergestellten Pastillenbonbons.

3. Verfahren zur Herstellung von Pastillenbonbons gemäß einem der Ansprüche 1 und 2, dadurch gekennzeichnet, daß man, um nach dem Walzen der die Bonbons bildenden Masse eine Vielzahl von Hohlräumen, vorzugsweise Mikrohohlräumen, zu verleihen, von denen zumindest manche mit der Oberfläche in Verbindung stehen, auf eine Substanz zurückgreift, die der die Bonbons bildenden Paste einverleibt wird und befähigt ist, unter der Einwirkung von zum Zeitpunkt der Trocknungsstufe angewandter Wärme und/oder gegebenenfalls unter Einwirkung eines chemischen Mittels zu einer Gasentwicklung innerhalb der Paste an einer Vielzahl von Stellen zu führen, an deren Stelle sich dann ebensoviele Hohlräume, vorzugsweise Mikrohohlräume, bilden, von denen zumindest manche mit der Oberfläche in Verbindung stehen, wobei diese Substanz aus einem Carbonat, insbesondere dem Natriumbicarbonat, besteht, und das chemische Mittel, das geeignet ist, eine Zersetzung des Carbonats herbeizuführen, eine für die Anwendung in der Confiserie oder in der pharmazeutischen Industrie zuträgliche organische Säure, insbesondere Gluconsäure, ist, die vorzugsweise in Form des Gluconodeltalactons eingebracht wird.

4. Verfahren gemäß Anspruch 3, dadurch gekennzeichnet, daß man der die Bonbons bildenden Masse in dem Maße, indem diese auf kristalliner Fruktose basieren, ein Strukturmittel zuführt.

## Claims

1. Pastilles of the lozenge type based on crystalline sorbitol or fructose, characterized by the fact that they have a dry mass and an even surface and comprise in their constituent mass a plurality of cavities, preferably microcavities, at least some of which communicate with the surface.

2. Pastilles of the lozenge type according to claim 1, characterized by the fact that the density of which is less by at least 5% and, preferably by at least 8% and by at the most 50%, than that of lozenges manufactured according to conventional formulae.

3. Process for the manufacture of the pastilles of the lozenge type according to claims 1 and 2, characterized by the fact that, to confer after rolling, on the constituent mass of the pastilles, a plurality of cavities, preferably microcavities, at least some of which communicate with the surface, recourse is had to a substance incorporated in the constituent dough of the pastilles and capable of giving rise, under the action of the heat applied at the time of the drying step and/or optionally under the action of a chemical agent, to a gaseous release within the dough, at a plurality of spots at the place of which are then formed as many cavities, preferably microcavities, at least some of which communicate with the surface, the said substance being constituted by a carbonate, particularly by sodium bicarbonate, the chemical agent adapted to cause the decomposition of the carbonate being an organic acid compatible with use in confectionery or in the pharmaceutical industry, particularly the gluconic acid, preferably introduced in the form of gluconodeltalactone.

4. Process according to claim 3, characterized by the fact that a structure agent is introduced in the constituent mass of the pastilles when the said pastilles are based on crystalline fructose.

9

FIG.1.

# FIG. 2.